(19) Europäisches Patentamt
European Patent Office
Office européen des brevets

(11) **EP 4 107 009 B1**

(12) **FASCICULE DE BREVET EUROPEEN**

(45) Date de publication et mention de la délivrance du brevet:
**03.04.2024 Bulletin 2024/14**

(21) Numéro de dépôt: **21707334.5**

(22) Date de dépôt: **02.02.2021**

(51) Classification Internationale des Brevets (IPC):
*B60C 9/00* *(2006.01)*    *B60C 13/00* *(2006.01)*
*B60C 9/18* *(2006.01)*    *B60C 9/08* *(2006.01)*
*B60C 9/04* *(2006.01)*    *B60C 9/20* *(2006.01)*

(52) Classification Coopérative des Brevets (CPC):
**B60C 9/08; B60C 9/0007; B60C 13/00;**
B60C 2009/0416; B60C 2009/0425;
B60C 2009/2016; B60C 2009/2019;
B60C 2013/007; B60C 2200/06

(86) Numéro de dépôt international:
**PCT/FR2021/050183**

(87) Numéro de publication internationale:
**WO 2021/165594 (26.08.2021 Gazette 2021/34)**

(54) **PNEUMATIQUE A FAIBLE HAUTEUR DE FLANC**

REIFEN MIT NIEDRIGER SEITENWANDHÖHE

TIRE HAVING A LOW SIDEWALL HEIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2020 FR 2001653**

(43) Date de publication de la demande:
**28.12.2022 Bulletin 2022/52**

(73) Titulaire: **COMPAGNIE GENERALE DES ETABLISSEMENTS MICHELIN**
**63000 Clermont-Ferrand (FR)**

(72) Inventeurs:
• **SALLAZ, Gilles**
  **63040 CLERMONT-FERRAND Cedex 9 (FR)**
• **DELFOSSE, Florent**
  **63040 CLERMONT-FERRAND Cedex 9 (FR)**
• **FOUCHER, Benoit**
  **63040 CLERMONT-FERRAND Cedex 9 (FR)**
• **EDMOND-DE-BOUSSIERS, Philippe**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
EP-B1- 3 061 627    WO-A1-01/49926
FR-A1- 2 969 039    FR-A1- 3 040 655
JP-A- 2011 140 250

**Description**

La présente invention concerne un pneumatique, plus particulièrement un pneumatique destiné à équiper des véhicules portant de lourdes charges et roulant à vitesse soutenue, tels que, par exemple les camions, tracteurs, remorques ou bus routiers.

D'une manière générale dans les pneumatiques à armature de carcasse radiale pour le transport de charge lourde, ladite armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection. L'armature de sommet peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la couche de sommet dite de travail, radialement la plus intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5°.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis l'axe de rotation du pneumatique est inférieure à, respectivement supérieure à ».

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Ce problème existe dans le cas de bords de deux couches d'éléments de renforcement, lesdites couches n'étant pas obligatoirement radialement adjacentes.

Pour limiter des élévations de température trop importantes au niveau du sommet du pneumatique, les matériaux constitutifs de la bande de roulement sont avantageusement choisis avec des pertes hystérétiques adaptées aux conditions de fonctionnement du pneumatique.

Par ailleurs, afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Cette amélioration de l'endurance des pneumatiques permet d'envisager au moins la possibilité d'un rechapage lorsque la bande de roulement est usée. En effet, lorsqu'il est souhaité faire un rechapage du pneumatique après usure de la bande de roulement, il faut être en mesure de rechaper un pneumatique dont le vieillissement n'est pas trop avancé afin d'optimiser l'utilisation de la nouvelle bande de roulement.

Par ailleurs, l'usage de pneumatiques sur des véhicules de type poids-lourds à usage routier, notamment lorsqu'ils sont en monte jumelée sur un essieu moteur ou sur des remorques conduit parfois à des utilisations non voulues en mode dégonflé. En effet, les analyses réalisées montrent qu'il est fréquent que des pneumatiques soient utilisés en mode sous-gonflé sans que le chauffeur s'en aperçoive ou ne s'arrête pour réparer, par exemple en cas de crevaison. Des pneumatiques sous-gonflés, voire totalement dégonflés, sont ainsi régulièrement utilisés sur des distances parcourues très significatives. Le pneumatique ainsi utilisé subit des déformations beaucoup plus importantes que dans les conditions normales d'utilisation. En effet, dans le cas d'une totale perte de pression de l'un des deux pneumatiques jumelés, la quasi-intégralité de la charge se reporte sur le second, le niveau de flèche ou d'écrasement des deux pneumatiques se retrouvant ainsi considérablement augmenté et avec lui l'importance des courbures et variations de courbure au tour de roue des câbles de l'armature de carcasse. Le défaut de rigidité pneumatique du pneu dégonflé conduisant de surcroît à une concentration de sa flexion dans la zone du flanc la moins rigide, les câbles de son armature de carcasse sont ainsi susceptibles d'atteindre localement de très forts niveaux de flexion pouvant altérer irréversiblement leurs propriétés, de résistance notamment, ne leur permettant plus de supporter ultérieurement les contraintes liées à une pression de gonflage rétablie à sa valeur nominale.

L'utilisation de câbles frettés (par exemple 3+9×0.18+0.15 6.5/12.5/3.5 SSZ au lieu de 3+9×0.18 6.5/12.5 SS) permet d'améliorer significativement la résistance à ce type de phénomène mais les pneumatiques ainsi réalisés, s'ils présentent moins de risques d'endommagement liés à des roulages à faible pression de gonflage, présentent toutefois de moins bonnes performances en termes d'endurance en flexion du fait notamment du frottement entre le fil de frette et les fils de la couche externe du câble lors des déformations du pneumatique en roulage dans des conditions normales d'utilisation.

Une nouvelle dimension de pneumatique, 315/45R22.5, a été proposée depuis quelques années. Cette dimension de pneumatique permet de baisser la hauteur de sellette des tracteurs de véhicule poids-lourd pour permettre leur association avec des remorques proposant trois mètres de hauteur intérieure utile, tout en respectant la réglementation européenne qui n'autorise pas des hauteurs maximales hors-tout de plus de 4 mètres.

De tels pneumatiques sont conçus pour porter une charge maximale de 2900 Kg en monte jumelée (indice de charge 145) pour autoriser des chargements pouvant aller jusqu'au maximum de la réglementation européenne qui correspond à une charge maximale de 11 500 Kg par essieu.

Les remorques évoquées précédemment étant destinées à une augmentation du volume de chargement plus que de celui de la charge transportée, les pneumatiques vont le plus souvent porter des charges bien inférieures à leur capacité maximale.

Il est toutefois nécessaire dans la conception du pneumatique de garantir cette capacité de charge maximale et de lui associer des performances d'endurance les meilleures possibles.

La dimension spécifique du pneumatique présentée ci-dessus, qui s'associe à une hauteur de flanc inférieure à 165 mm, conduit pour une charge portée donnée à une déformation supérieure à celle d'un autre pneumatique dont la hauteur de flanc serait plus importante. La dimension même du pneumatique conduit donc d'une part à de faibles rayons de courbures des éléments de renforcement de l'armature de carcasse dans la zone du flanc et d'autre part, à de plus fortes variations de courbures au tour de roue. Ces deux éléments liés à l'utilisation du pneumatique sont pénalisantes pour ce qui est de la performance en termes d'endurance.

Si on associe ce pneumatique de dimension 315/45R22.5 à sa capacité de charge maximale au cas décrit précédemment d'une crevaison ou perte de pression en monte jumelée, sa très faible hauteur de flanc peut conduire à une détérioration extrêmement rapide des câbles de l'armature de carcasse.

Le brevet EP-B-3 061 627 propose l'utilisation de câbles compacts non frettés du type 19.18 (0.20+18×0.18 10 S). Ces câbles constitués de fils de faibles diamètres sont connus pour leur utilisation en armature de carcasse pour poids lourds notamment du fait des faibles diamètres des fils qui permettent de mieux supporter les courbures répétées. Toutefois il a été mis en évidence que dans des conditions sévères d'utilisation, en particulier dans le cas décrit précédemment d'une perte de pression en monte jumelée, ces câbles ne sont pas considérés comme autorisant l'accès à des performances jugées satisfaisantes.

Le document FR 3 040 655 A1 décrit un pneumatique pour poids lourds comportant une armature de carcasse radiale constituée d'au moins une couche d'éléments de renforcement métalliques et une armature de sommet coiffée radialement d'une bande de roulement.

Le document FR 2 969 039 Al décrit un pneumatique pour poids lourds qui comporte une couche d'éléments de câbles saturés retournée autour de la tringle en complément de l'armature de carcasse pour renforcer celle-ci.

Les inventeurs se sont ainsi donnés pour mission d'être en mesure de fournir des pneumatiques, notamment des pneumatiques de dimension 315/45 R 22.5, destinés à équiper des véhicules selon une monte jumelée dont les performances d'endurance sont améliorées y compris dans des conditions de roulage en mode sous-gonflé.

Ce but a été atteint selon l'invention par un pneumatique pour véhicule de type poids lourds, comprenant une armature de carcasse radiale constituée d'au moins une couche d'éléments de renforcement métalliques, ledit pneumatique comprenant une armature de sommet, ladite armature de sommet étant coiffée radialement d'une bande de roulement, ladite bande de roulement étant réunie à deux bourrelets par l'intermédiaire de deux flancs, dans une coupe méridienne du pneumatique, l'épaisseur du flanc la plus faible, mesurée selon la direction axiale, étant supérieure à 10 millimètres, l'épaisseur de mélange caoutchouteux, mesurée selon la direction axiale définie par l'épaisseur du flanc la plus faible, entre la surface intérieure de la cavité du pneumatique et le point d'un élément de renforcement métallique de ladite au moins une couche d'armature de carcasse le plus proche de la dite surface intérieure de la cavité étant supérieure à l'épaisseur de mélange caoutchouteux, mesurée selon la direction axiale définie par l'épaisseur du flanc la plus faible, entre la surface extérieure du pneumatique et le point d'un élément de renforcement métallique de ladite au moins une couche d'armature de carcasse le plus proche de la dite surface extérieure du pneumatique.

Selon un mode de réalisation préféré de l'invention, l'épaisseur du flanc la plus faible, mesurée selon la direction axiale, est inférieure à 20 millimètres.

Les mesures d'épaisseurs sont réalisées sur une coupe d'un pneumatique, dont l'écartement des bourrelets est le même que lorsque le pneumatique est monté sur la jante de montage préconisée par l'ETRTO, celui-ci n'étant donc ni monté ni gonflé.

Les résultats obtenus avec des pneumatiques de dimension 315/45R22.5, conformes à l'invention, ont effectivement mis en évidence que les performances en termes d'endurance sont améliorées, quelles que soient les conditions de roulage et notamment dans le cas d'une monte jumelée en mode sous-gonflé.

Les inventeurs ont en effet su mettre en évidence que, notamment dans un pneumatique de très faible hauteur de flanc, notamment de moins de 165 mm et plus particulièrement de moins de 160 mm, la flexion du flanc lors de l'écrasement d'un pneumatique sous-gonflé se concentre dans la zone de plus faible épaisseur et conduit à des rayons de courbure très faibles et à de grandes variations de courbures au tour de roue. Les inventeurs constatent ainsi que les pneumatiques selon l'invention, dont la partie caoutchouteuse axialement intérieure à la couche d'armature de carcasse présente, dans cette zone de plus faible épaisseur, une épaisseur supérieure à celle de la partie caoutchouteuse axialement extérieure à la couche d'armature de carcasse, présentent des performances en termes d'endurance améliorées. Les inventeurs pensent interpréter ces résultats du fait d'une masse caoutchouteuse plus épaisse dans la zone mise en compression lors de la flexion du flanc du pneumatique et pensent que cette répartition des volumes caoutchouteux contribue à limiter la valeur des rayons de courbures lors des mises en flexion des flancs.

Au sens de l'invention, la hauteur de flanc est déterminée à partir du marquage du pneumatique. Dans le cas d'un pneumatique de dimension 315/45 R22.5, la hauteur de flanc est ainsi égale à $315 \times 45/100$, soit 141.75 mm.

Avantageusement selon l'invention, l'épaisseur du flanc la plus faible, mesurée selon la direction axiale, est supérieure à 12 millimètres.

Selon une variante de réalisation préférée de l'invention, le mélange caoutchouteux entre la cavité du pneumatique et les éléments de renforcement de la couche d'armature de carcasse étant constitué d'au moins trois couches de mélange caoutchouteux, le ratio de l'épaisseur de la couche formant la paroi de la cavité du pneumatique, mesurée selon la direction axiale définie par l'épaisseur du flanc la plus faible, sur l'épaisseur de mélange caoutchouteux, mesurée selon la direction axiale définie par l'épaisseur du flanc la plus faible, entre la surface intérieure de la cavité du pneumatique et le point d'un élément de renforcement métallique de ladite au moins une couche d'armature de carcasse le plus proche de la dite surface intérieure de la cavité est inférieur à 0.5 et de préférence inférieur à 0.4.

Les trois couches constituant le volume caoutchouteux compris entre l'armature de carcasse et la cavité du pneumatique sont en partant de la cavité, une première couche constituant la paroi de la cavité, une deuxième couche de mélange caoutchouteux au contact de la première couche et enfin une troisième couche de mélange caoutchouteux au contact de la deuxième couche et formant la couche de calandrage de la couche d'armature de carcasse, c'est-à-dire la couche de mélange au contact des éléments de renforcement de la couche d'armature de carcasse.

La première couche de mélange caoutchouteux a pour fonction un rôle d'étanchéité et est le plus souvent constituée d'un matériau de type butyle.

La deuxième couche de mélange caoutchouteux a pour fonction de compléter la première couche en fixant l'oxygène. Il est connu que cette deuxième couche, de formulation plus usuelle, voit son efficacité augmenter avec une augmentation de la température alors que la première couche connait l'effet inverse, sa fonction d'étanchéité devenant moins efficace lorsque la température augmente.

Les inventeurs ont mis en évidence que les mélanges caoutchouteux constituant la deuxième couche voient leur rigidité augmenter avec le temps du fait de ce phénomène d'oxydation. Le vieillissement du pneumatique peut paradoxalement être ainsi considéré comme un effet bénéfique en termes d'endurance au regard des flexions lors des roulages en mode sous-gonflé.

Selon un mode de réalisation préféré de l'invention, les éléments de renforcement métalliques de ladite au moins une couche d'armature de carcasse sont des câbles métalliques non frettés présentant au test dit de perméabilité un débit inférieur à 20 cm$^3$/min.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm$^3$/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de ± 0,2 cm$^3$/min, les valeurs mesurées inférieures ou égales à 0,2 cm$^3$/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/min présentent un taux de pénétration supérieure à 66%.

Des câbles présentant au test dit de perméabilité un débit inférieur à 2 cm3/min présentent un taux de pénétration supérieure à 90%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

Selon ce mode de réalisation préféré de l'invention, les câbles de l'armature de carcasse présentent de la matière caoutchouteuse entre les fils constituants les câbles qui confèrent des performances en termes d'endurance encore améliorées notamment lors de conditions de roulage extrêmes par exemple en cas de surcharge.

Les inventeurs ont mis en évidence que les câbles métalliques non frettés de l'armature de carcasse, dans lesquels un mélange caoutchouteux est présent entre au moins une partie des fils le constituant, permettent d'améliorer significativement les propriétés d'endurance de l'armature de carcasse lorsque le pneumatique est utilisé dans des conditions extrêmes de surcharge et/ou de faible gonflage sans nuire à ses propriétés d'endurance en roulage dans des conditions normales et sans pénaliser ses coûts de production. Les inventeurs interprètent ces résultats par la présence du mélange caoutchouteux au sein du câble qui permet d'accepter la flexion dudit câble avec des rayons de courbure relativement faibles sans que ledit câble ou les fils le constituant ne soient altérés. Les inventeurs pensent avoir mis en évidence que la présence du mélange caoutchouteux évite la désorganisation dudit câble c'est-à-dire qu'elle évite un écartement des fils constituants le câble lorsque celui-ci est fléchi avec des rayons de courbure très faibles et prévient ainsi les risques de rupture desdits fils.

Le pneumatique selon ce mode de réalisation de l'invention et plus précisément les éléments de renforcement de son armature de carcasse subissent la flexion imposée et la nature desdits éléments de renforcement, c'est-à-dire la présence du mélange caoutchouteux au sein du câble, permet d'améliorer l'endurance desdits câbles subissant une telle flexion et en conséquence de contribuer à l'amélioration de l'endurance du pneumatique.

Selon une première variante avantageuse de réalisation de l'invention, les éléments de renforcement de la dite au moins une couche de l'armature de carcasse sont des câbles métalliques non frettés à couches saturées, au moins une couche interne étant gainée d'une couche constituée d'une composition polymérique telle qu'une composition de caoutchouc non réticulable, réticulable ou réticulée, de préférence à base d'au moins un élastomère diénique.

Au sens de l'invention, des câbles métalliques à au moins deux couches, au moins une couche interne étant gainée d'une couche constituée d'une composition de caoutchouc non réticulable, réticulable ou réticulée présentent au test dit de perméabilité un débit quasi nul et donc inférieur à 20 cm3/min.

De préférence, selon cette première variante de réalisation de l'invention, les éléments de renforcement métalliques de ladite au moins une couche d'armature de carcasse présentent au test dit de perméabilité un débit inférieur à 10 cm$^3$/min et de préférence encore inférieur à 2 cm$^3$/min.

Des câbles dits "à couches" ("*layered cords*") ou "multicouches" sont des câbles constitués d'un noyau central et d'une ou plusieurs couches de brins ou fils pratiquement concentriques disposées autour de ce noyau central.

Au sens de l'invention, une couche saturée d'un câble à couches est une couche constituée de fils dans laquelle il n'existe pas suffisamment de place pour y ajouter au moins un fil supplémentaire.

Des câbles métalliques non frettés à couches saturées, au moins une couche interne étant gainée d'une couche constituée d'une composition de caoutchouc non réticulable, réticulable ou réticulée sont donc des câbles dans lesquels un mélange caoutchouteux est présent entre les fils du câble et permet au câble d'accepter une flexion comme décrit précédemment, en limitant fortement les risques de dégradation des fils.

La composition de caoutchouc formant la gaine autour d'au moins une couche interne desdits câbles métalliques d'au moins une couche de l'armature de carcasse, qui peut être non réticulable, réticulable ou réticulée, est de préférence à base d'au moins un élastomère diénique.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine peut être réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus.

La composition de caoutchouc de la gaine selon l'invention comprend, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

Selon cette première variante avantageuse de l'invention, les éléments de renforcement de ladite au moins une couche de l'armature de carcasse sont des câbles métalliques à couches saturées de construction [L+M+N], comportant une première couche C1 à L fils de diamètre $d_1$ avec L allant de 1 à 4, entourée d'au moins une couche intermédiaire C2 à M fils de diamètre $d_2$ enroulés ensemble en hélice selon un pas $p_2$ avec M allant de 3 à 12, ladite couche C2 étant entourée d'une couche externe C3 de N fils de diamètre $d_3$ enroulés ensemble en hélice selon un pas $p_3$ avec N allant de 8 à 20, une gaine constituée d'une composition de caoutchouc non réticulable, réticulable ou réticulée à base d'au moins un élastomère diénique, recouvrant au moins ladite couche C1 et/ou au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas d'hélice représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

De préférence, le câble selon cette première variante de l'invention est un câble à couches de construction notée [1+M+N], c'est-à-dire que la première couche C1 est constituée d'un seul fil.

Le câble 19.18 gainé de construction (0.20+6×0.18)gainé+12×0.18 10 S est un exemple de câble selon cette première variante de l'invention.

Le câble selon cette variante de l'invention pourra être obtenu selon différentes techniques connues de l'homme du métier, par exemple en deux étapes, tout d'abord par gainage via une tête d'extrusion des L fils de la couche C1 ou de la structure intermédiaire des L+M fils des couches C1+C2, étape suivie dans un deuxième temps d'une opération finale de câblage ou retordage des N fils restants (couche C3) autour de la couche C2.

Selon une deuxième variante avantageuse de réalisation de l'invention, les éléments de renforcement d'au moins une couche de l'armature de carcasse sont des câbles métalliques multicouches non frettés, à couche externe insaturée, comportant une âme (notée C0) de L fils de diamètre $d_0$ entourée d'une couche intermédiaire (notée C1) de M fils (M = 4, 5, 6 ou 7) de diamètre $d_1$ enroulés ensemble en hélice selon un pas $p_1$, cette couche C1 étant elle-même entourée d'une couche externe (notée C2) de N fils de diamètre $d_2$ enroulés ensemble en hélice selon un pas $p_2$, N étant inférieur de 1 à 3 au nombre maximal Nmax de fils enroulables en une couche autour de la couche C1, lesdits câbles présentant les caractéristiques suivantes ($d_0$, $d_1$, $d_2$, $p_1$ et $p_2$ en mm):

- (i) $0{,}14 < d_0 < 0{,}28$ ;
- (ii) $0{,}12 < d_1 < 0{,}25$ ;
- (iii) $0{,}12 < d_2 < 0{,}25$ ;
- (iv)

| | | |
|---|---|---|
| pour | M = 4 : | $0{,}40 < (d_0 / d_1) < 0{,}80$ ; |
| pour | M = 5 : | $0{,}70 < (d_0 / d_1) < 1{,}10$ ; |
| pour | M = 6 : | $1{,}10 < (d_0 / d_1) < 1{,}40$ ; |
| pour | M = 7 : | $1{,}40 < (d_0 / d_1) < 1{,}70$ ; |

- (v) $5 \pi (d_0 + d_1) < p_1 < p_2 < 5 \pi (d_0 + 2d_1 + d_2)$ ;
- (vi) les fils des couches C1 et C2 sont orientés dans le même sens d'enroulement.

Les caractéristiques (i) à (vi) ci-dessus, en combinaison, permettent d'obtenir à la fois:

- des forces de contact suffisantes mais limitées entre C0 et C1, favorables à une usure réduite et une fatigue moindre des fils de la couche C1;
- grâce notamment à une optimisation du rapport des diamètres ($d_0 / d_1$) et des angles d'hélice que forment les fils des couches C1 et C2, une pénétration optimale du caoutchouc à travers les couches C1 et C2 et jusqu'au coeur C0 de ce dernier, assurant d'une part une très haute protection contre la corrosion ou son éventuelle propagation, d'autre part une désorganisation minimale du câble sous sollicitation en forte flexion, ne nécessitant notamment pas la présence d'un fil de frette autour de la dernière couche;
- une usure par fretting réduite entre les fils des couches C1 et C2, ceci malgré la présence de pas différents ($p_1 \neq p_2$) entre les deux couches C1 et C2.

Les caractéristiques (v) et (vi) - pas $p_1$ et $p_2$ différents et couches C1 et C2 orientés dans le même sens d'enroulement - font que, de manière connue, les fils des couches C1 et C2 sont essentiellement disposés selon deux couches cylindriques (i.e. tubulaires), adjacentes et concentriques. Par câbles à couches dites "tubulaires" ou "cylindriques", on entend ainsi des câbles constitués d'une âme (i.e., noyau ou partie centrale) et d'une ou plusieurs couches concentriques, chacune de forme tubulaire, disposée(s) autour de cette âme, de telle manière que, au moins dans le câble au repos, l'épaisseur de chaque couche est sensiblement égale au diamètre des fils qui la constituent ; il en résulte que la section transversale du câble a un contour ou enveloppe qui est sensiblement circulaire.

La couche externe C2 est une couche tubulaire de N fils dite "insaturée" ou "incomplète", c'est-à-dire que, par définition, il existe suffisamment de place dans cette couche tubulaire C2 pour y ajouter au moins un (N+1)ème fil de diamètre $d_2$, plusieurs des N fils se trouvant éventuellement au contact les uns des autres.

De préférence, le câble selon cette deuxième variante de l'invention est un câble à couches de construction notée [1+M+N], c'est-à-dire que son âme C0 est constituée d'un seul fil.

Le câble 18.18 à couche externe insaturée de construction 0.20+6×0.18+11×0.18 7/10 SS est un exemple de câble selon cette première variante de l'invention.

Des câbles métalliques non frettés à couche externe insaturée sont des câbles dans lesquels le mélange caoutchouteux constituant les couches de calandrage peut pénétrer et est donc présent entre les fils du câble et permet au câble d'accepter une flexion comme décrit précédemment, en limitant fortement les risques de dégradation des fils.

Le taux de pénétration de ces câbles selon cette deuxième variante de réalisation de l'invention peut encore être optimisé par tout moyen connu de l'homme du métier. Par exemple avec des mélanges de caoutchouc plus fluides qui pénètrent plus facilement les câbles lors de la cuisson du pneumatique. Il est encore par exemple possible d'augmenter la pression dans le moule lors de la cuisson du pneumatique. Il peut aussi par exemple s'agir d'une combinaison de ces moyens.

De préférence, selon cette deuxième variante de réalisation de l'invention, les éléments de renforcement métalliques de ladite au moins une couche d'armature de carcasse présentent au test dit de perméabilité un débit inférieur à 10 cm$^3$/min et de préférence encore inférieur à 4 cm$^3$/min et de préférence également avec au moins 2 points à débit nul sur une longueur de 2 cm.

D'une manière générale, l'invention peut être mise en oeuvre, pour former les câbles de l'armature de carcasse ci-dessus décrits, avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Selon un mode de réalisation préféré de l'invention, l'armature sommet est formée d'au moins deux couches de sommet de travail d'éléments de renforcement métalliques croisés d'une couche à l'autre en faisant avec la direction circonférentielle des angles compris entre 10° et 45°, lesdits angles étant orientés de part et d'autre de la direction circonférentielle.

De préférence encore, les éléments de renforcement desdites au moins deux couches de sommet de travail sont inextensibles.

De préférence encore selon l'invention, l'armature sommet comporte une couche d'éléments de renforcement circonférentiels.

Selon un mode de réalisation préférée de l'invention, la couche d'éléments de renforcement circonférentiels est radialement disposée entre deux couches de sommet de travail.

Avantageusement selon ce mode de réalisation de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 45° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 4 qui représentent :

- figure 1, une vue méridienne d'un schéma d'un pneumatique selon l'invention,

- figure 2, une vue partielle agrandie d'une partie du schéma de la figure 1,

- figure 3, une représentation schématique d'une vue en coupe d'un premier exemple de câble d'armature de carcasse selon l'invention,

- figure 4, une représentation schématique d'une vue en coupe d'un deuxième exemple de câble d'armature de carcasse selon l'invention.

Les figures ne sont pas représentées à l'échelle pour en simplifier la compréhension.

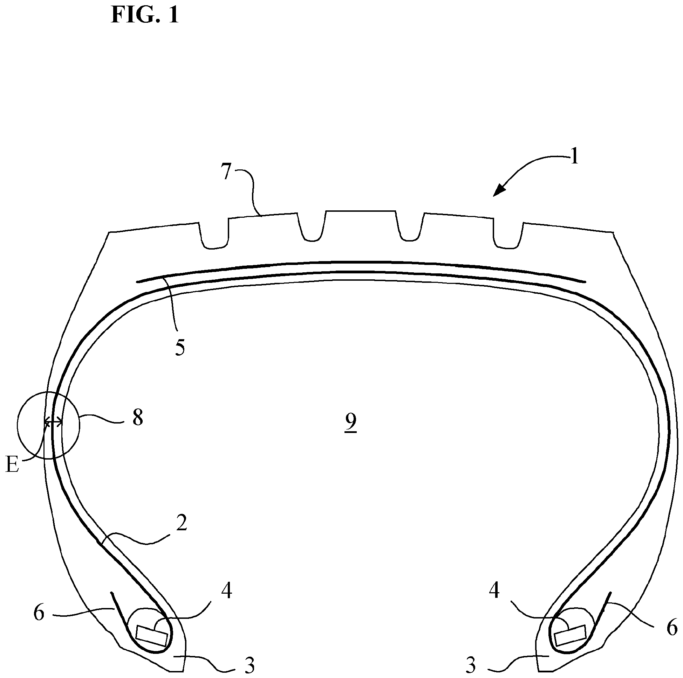

Sur la figure 1, le pneumatique 1 est de dimension 315/45 R 22.5. Ledit pneumatique 1 comprend une armature de carcasse radiale 2 ancrée dans deux bourrelets 3, autour de tringles 4. L'armature de carcasse 2 est formée d'une seule couche de câbles métalliques enroulée autour de chacune des tringles 4 pour former un retournement 6. L'armature de carcasse 2 est frettée par une armature de sommet 5, elle-même coiffée d'une bande de roulement 7. L'armature de sommet 5 est formée radialement de l'intérieur à l'extérieur :

- d'une couche de triangulation formée de câbles métalliques inextensibles non frettés 2+7×0.35, continus sur toute la largeur de la nappe, orientés d'un angle égal à 50°,

- d'une première couche de travail formée de câbles métalliques inextensibles non frettés 2+7×0.35, continus sur toute la largeur de la nappe, orientés d'un angle égal à 18°,

- d'une couche d'éléments de renforcement circonférentiels formée de câbles métalliques élastiques 3× (0.26+6×0.23),

- d'une seconde couche de travail formée de câbles métalliques inextensibles non frettés 2+7×0.35, continus sur toute la largeur de la nappe, orientés d'un angle égal à 18° et croisés avec les câbles métalliques de la première couche de travail,

- d'une couche de protection formée de câbles métalliques élastiques 3×2×0.35.

Le détail des différentes couches formant l'armature de sommet n'est pas représenté sur les figures.

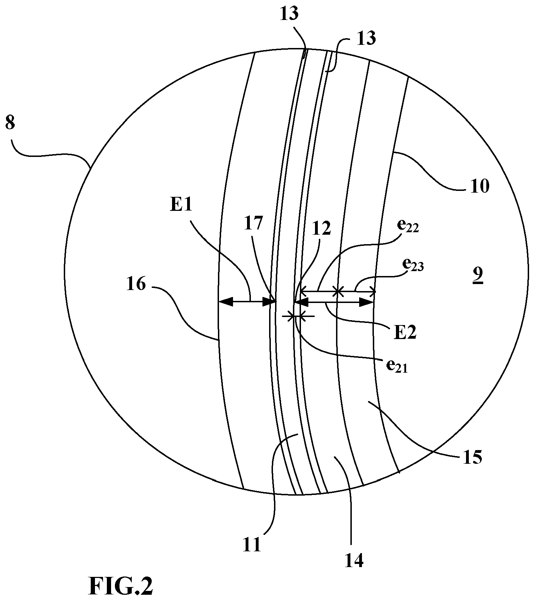

La figure 2 illustre un agrandissement de la zone 8 de la figure 1 qui correspond à la zone de moindre épaisseur E du flanc du pneumatique 1. Cette épaisseur la plus faible du flanc est mesurée selon la direction axiale entre la surface extérieure 16 du pneumatique et la surface intérieure 10 de la cavité 9 du pneumatique. Sur cette figure 2, on indique notamment l'épaisseur $E2$, mesurée selon la direction axiale, de mélange caoutchouteux entre la surface intérieure 10 de la cavité 9 du pneumatique et le point 12 d'un élément de renforcement 11 le plus proche de ladite surface 10. Cette épaisseur $E2$ est la somme des épaisseurs des différents mélanges caoutchouteux mis en place entre ledit élément de renforcement 11 de l'armature de carcasse 2 et la surface intérieure 10 de la cavité 9 du pneumatique ; il s'agit d'une part de l'épaisseur $e_{21}$ de la couche de calandrage 13 radialement intérieure de l'armature de carcasse et d'autre part, des épaisseurs $e_{22}$ et $e_{23}$ des différentes couches 14, 15 de mélanges caoutchouteux formant la paroi interne du pneumatique 1. L'épaisseur $e_{21}$ est égale à la longueur mesurée axialement entre le point d'un élément de renforcement métallique 11 de l'armature de carcasse 2 le plus proche de la surface intérieure de la cavité 8 et la surface axialement intérieure de ladite couche 13 de calandrage. Les épaisseurs $e_{22}$ et $e_{23}$ sont égales à la longueur mesurée axialement entre un point d'une surface et un point de l'autre surface de la couche concernée respectivement 14 ou 15.

Sur cette figure 2, est encore indiquée l'épaisseur $E1$, mesurée selon la direction axiale, de mélange caoutchouteux entre la surface extérieure 16 du pneumatique et le point 17 d'un élément de renforcement 11 le plus proche de ladite surface 16.

L'épaisseur $e_{21}$ est égale à 0.3 mm.

L'épaisseur $e_{22}$ est égale à 3.8 mm.

L'épaisseur $e_{23}$ est égale à 2.5 mm.

L'épaisseur $E1$ est égale à 5.9 mm.

L'épaisseur $E2$, somme de $e_{21}$, $e_{22}$ et $e_{23}$, est égale à 6.6 mm.

L'épaisseur $E$ est égale à 13.3 mm.

Conformément à l'invention, l'épaisseur $E$ est supérieure à 10 mm, l'épaisseur $E2$ est supérieure à l'épaisseur $E1$ et le ratio $e_{23}/E2$ égal à 0.38 est bien inférieur à 0.5.

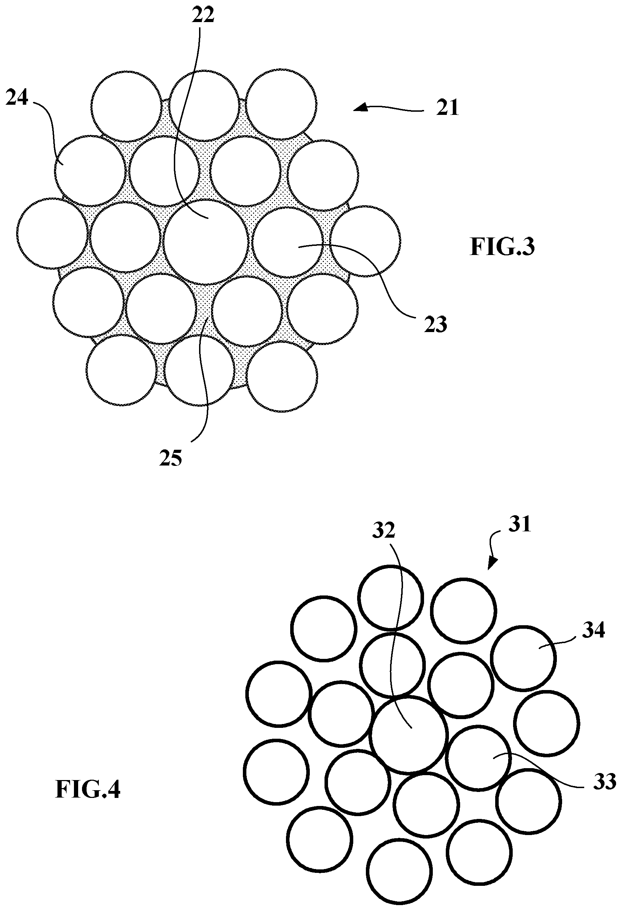

La figure 3 illustre une représentation schématique de la section d'un câble 21 d'armature de carcasse 2 du pneumatique 1 selon une première variante de réalisation de l'invention. Ce câble 21 est un câble à couche de structure 1+6+12, non fretté, constitué d'un noyau central formé d'un fil 22, d'une couche intermédiaire formée de six fils 23 et d'une couche externe formée de douze fils 24.

Il présente les caractéristiques suivantes (d et p en mm) :

- structure 1+6+12 ;
- $d_1 = 0.20$ (mm);
- $d_2 = 0.18$ (mm);
- $p_2 = 10$ (mm)
- $d_3 = 0.18$ (mm);
- $p_2 = 10$ (mm),
-

$$(d_2 / d_3) = 1 \; ;$$

avec $d_2$, $p_2$, respectivement le diamètre et le pas d'hélice de la couche intermédiaire et $d_3$ et $p_3$, respectivement le diamètre et le pas de d'hélice des fils de la couche externe. Les fils de la couche intermédiaire et de la couche externe sont enroulés avec le même pas et dans le même sens.

L'âme du câble constitué du noyau central formé du fil 22 et de la couche intermédiaire formée des six fils 23 est gainé par une composition de caoutchouc 25 à base d'élastomère diénique non vulcanisé (à l'état cru). Le gainage est obtenu via une tête d'extrusion de l'âme constituée du fil 22 entouré des six fils 23, suivi d'une opération finale de retordage ou câblage des 12 fils 24 autour de l'âme ainsi gainé.

L'aptitude à la pénétration du câble 21, mesurée selon la méthode décrite précédemment, est égale à 95 %.

La composition élastomérique constituant la gaine de caoutchouc 25 est réalisée à partir d'une composition de même formulation que celle des couches de calandrage 13 de l'armature de carcasse que les câbles 21 sont destinés à renforcer.

La figure 4 illustre une représentation schématique de la section d'un câble 31 d'armature de carcasse du pneumatique 1 selon une deuxième variante de réalisation de l'invention. Ce câble est un câble métallique multicouche non fretté 31, à couche externe insaturée de formule de structure 1+6+11, non fretté, constitué d'une âme formée d'un fil 32, d'une couche intermédiaire formée de six fils 33 et d'une couche externe formée de onze fils 34.

Ce câble 31présente les caractéristiques suivantes (d et p en mm) :

- structure 1+6+11 ;
- $d_0$ = 0.20 (mm);
- $d_1$ = 0.18 (mm);
- $p_1$ = 7 (mm)
- $d_2$ = 0.18 (mm);
- $p_2$ = 10 (mm),
-

$$(d_0 / d_1) = 1{,}11 \; ;$$

avec $d_1$, $p_1$, respectivement le diamètre et le pas d'hélice de la couche intermédiaire et $d_2$ et $p_2$, respectivement le diamètre et le pas de d'hélice des fils de la couche externe.

Les fils 33 et 34 enroulés autour du fil 31 sont disposés selon deux couches adjacentes et concentriques, tubulaires (une première couche d'épaisseur sensiblement égale à $d_1$, puis une couche externe d'épaisseur sensiblement égale à $d_2$).

Des essais ont été réalisés avec des pneumatiques I1, I2 et I3 réalisés selon l'invention et avec des pneumatiques de référence T1, T2 et T3.

Le pneumatique I1 selon l'invention est réalisé conformément aux figures 1, 2 et les câbles de l'armature de carcasse sont des câbles 0.20+(6+12)×0.18, non frettés, constitués d'un noyau central formé d'un fil, d'une couche intermédiaire formée de six fils et d'une couche externe formée de douze fils. Ces câbles sont identiques structurellement à ceux de la figure 3 sans la gaine 25.

Le pneumatique I2 selon l'invention est réalisé conformément aux figures 1, 2 et 3.

Le pneumatique I3 selon l'invention est réalisé conformément aux figures 1, 2 et 4.

Le pneumatique T1 est un premier pneumatique du commerce dont les éléments de renforcement de la couche d'armature de carcasse sont des câbles 19.17 NF, de formule 0.20+(6+12)×0.17.

Le pneumatique T2 est un deuxième pneumatique du commerce dont les éléments de renforcement de la couche d'armature de carcasse sont des câbles 19.17 NF de formule 0.20+(6+12)×0.17.

Le pneumatique T3 est un troisième pneumatique du commerce dont les éléments de renforcement de la couche d'armature de carcasse sont des câbles 27.16 NF de formule (3+9+15)×0.16.

Les caractéristiques des épaisseurs E, E1, E2 et $e_{23}$ des pneumatiques T1, T2 et T3 sont listés dans le tableau ci-dessous :

|  | T1 | T2 | T3 |
|---|---|---|---|
| E (mm) | 13.2 | 15.4 | 15.5 |
| E1 (mm) | 8.4 | 10.4 | 9.6 |
| E2 (mm) | 3.9 | 4.2 | 4.9 |
| $e_{23}$ (mm) | 1.5 | 2 | 2.2 |
| $e_{23}$/E2 | 0.38 | 0.48 | 0.45 |

Le tableau ci-après indique les valeurs obtenues au test dit de perméabilité pour ce qui concerne le débit moyen et le nombre d'éprouvettes à débit nul sur une longueur de 2 cm. Comme expliqué précédemment, ces mesures sont effectuées sur des éprouvettes de câbles prélevées dans la zone flanc du pneumatique. Le débit moyen est déterminé à partir d'une moyenne effectuée sur 10 éprouvettes.

Le nombre d'éprouvettes à débit nul est le nombre de mesures présentant un débit nul parmi les 10 éprouvettes.

|  |  | Test de perméabilité | zone flanc |
|---|---|---|---|
| Pneumatique I1 | Débit moyen (cm$^3$/min) | | 23.3 |
| | Nombre d'éprouvettes à débit nul sur 2 cm | | 0/10 |
| Pneumatique I2 | Débit moyen (cm$^3$/min) | | 0 |
| | Nombre d'éprouvettes à débit nul sur 2 cm | | 10/10 |
| Pneumatique I3 | Débit moyen (cm$^3$/min) | | 2,1 |
| | Nombre d'éprouvettes à débit nul sur 2 cm | | 5110 |
| Pneumatique T1 | Débit moyen (cm$^3$/min) | | 11.5 |
| | Nombre d'éprouvettes à débit nul sur 2 cm | | 0/10 |
| Pneumatique T2 | Débit moyen (cm$^3$/min) | | 15.3 |
| | Nombre d'éprouvettes à débit nul sur 2 cm | | 0/10 |
| Pneumatique T3 | Débit moyen (cm$^3$/min) | | 87.2 |
| | Nombre d'éprouvettes à débit nul sur 2 cm | | 0/10 |

Ces mesures mettent en évidence, que dans les pneumatiques de référence T1, T2 et T3, ainsi que dans le pneumatique selon l'invention I1, il n'existe pas de bouchons de caoutchouc dans les câbles puisque toutes les éprouvettes ont des débits non nuls. En outre, dans les câbles de l'armature de carcasse des pneumatiques I3 selon l'invention, lorsque le débit est non nul, il apparaît qu'il est fortement réduit par rapport aux câbles de l'armature de carcasse des pneumatiques T1, T2, T3 ou I1.

Ces observations traduisent notamment une pénétration plus importante des câbles de l'armature de carcasse des pneumatiques I3 selon l'invention par le caoutchouc comparée à celle des câbles de l'armature de carcasse des pneumatiques de référence T1, T2 et T3 ou du pneumatique selon l'invention I1.

Les essais ont consisté à reproduire un roulage de pneumatiques jumelés dont l'un des pneumatiques est dans un état sous-gonflé. Pour cela, les pneumatiques selon l'invention I1, I2 et I3 et les pneumatiques de référence T1, T2 et T3 sont testés en monte jumelée, l'un, le pneumatique testé, étant gonflé à 1 bar et donc à une faible pression et l'autre, le pneumatique support, à 7 bars initialement. Les conditions de gonflage sont rigoureusement les mêmes pour tous les pneumatiques.

Ils effectuent des roulages sur véhicule dans des conditions absolument identiques reproduisant des roulages usuels, notamment en ce qui concerne la charge portée, suivis par des véhicules poids-lourds du type spécifique équipé de la dimension 315/45 R 22.5.

Les roulages sont interrompus régulièrement afin de porter la pression du pneumatique testé de 1 à 9 bars afin de vérifier sa tenue à la pression nominale de gonflage. Le roulage du pneumatique testé reprend ensuite à 1 bar mais avec une réduction de la pression du pneumatique support jusqu'au prochain arrêt. Et ainsi de suite avec à chaque reprise du roulage une réduction de la pression du pneumatique support de façon à sévériser la flexion flanc du pneumatique testé. L'essai s'achève lorsque, du fait d'un endommagement irréversible des câbles, la résistance de l'armature de carcasse devient insuffisante pour soutenir la pression nominale de gonflage et que le pneumatique éclate lors de sa remise en pression.

Les pneumatiques de référence T1, T2 et T3 ont ainsi pu parcourir une distance moyenne de 2000 km dans les conditions imposées lors du test.

Le pneumatique I3 selon l'invention a quant à lui pu parcourir une distance de 4000 km.

Les pneumatiques I1 et I2 selon l'invention, constitués de surcroit avec des câbles d'armature de carcasse emplis de gomme, ont parcourus une distance moyenne de 5000 Km.

Les pneumatiques selon l'invention permettent ainsi d'améliorer les propriétés d'endurance pour ce qui concerne des roulages en mode sous-gonflé.

**Revendications**

1. Pneumatique (1) pour véhicule de type poids lourds, comprenant une armature de carcasse radiale (2) constituée d'au moins une couche d'éléments de renforcement métalliques, ledit pneumatique comprenant une armature de sommet (5), ladite armature de sommet (5) étant coiffée radialement d'une bande de roulement (7), ladite bande de roulement étant réunie à deux bourrelets (3) par l'intermédiaire de deux flancs, **caractérisé en ce que,** dans une coupe méridienne du pneumatique, l'épaisseur du flanc la plus faible E, mesurée selon la direction axiale, est supérieure à 10 millimètres et **en ce que** l'épaisseur E2 de mélange caoutchouteux, mesurée selon la direction axiale définie par l'épaisseur du flanc la plus faible, entre la surface intérieure (10) de la cavité (8) du pneumatique et le point (12) d'un élément de renforcement métallique (11) de ladite au moins une couche d'armature de carcasse (2) le plus proche de la dite surface intérieure (10) de la cavité (8) est supérieure à l'épaisseur E1 de mélange caoutchouteux, mesurée selon la direction axiale définie par l'épaisseur du flanc la plus faible, entre la surface extérieure (16) du pneumatique et le point (17) d'un élément de renforcement métallique (11) de ladite au moins une couche d'armature de carcasse (2) le plus proche de la dite surface extérieure (16) du pneumatique.

2. Pneumatique (1) selon la revendication 1, le mélange caoutchouteux entre la cavité (8) du pneumatique et les éléments de renforcement (11, 21, 31) de ladite au moins une couche d'armature de carcasse (2) étant constitué d'au moins trois couches de mélange caoutchouteux (13, 14, 15), **caractérisé en ce que** le ratio de l'épaisseur $e_{23}$ de la couche (15) formant la paroi de la cavité (8) du pneumatique, mesurée selon la direction axiale définie par l'épaisseur du flanc la plus faible, sur l'épaisseur E2 de mélange caoutchouteux, mesurée selon la direction axiale définie par l'épaisseur du flanc la plus faible, entre la surface intérieure (10) de la cavité (8) du pneumatique et le point (12) d'un élément de renforcement métallique (11, 21, 31) de ladite au moins une couche d'armature de carcasse le plus proche de la dite surface intérieure (10) de la cavité (8) est inférieur à 0.5 et de préférence inférieur à 0.4.

3. Pneumatique (1) selon l'une des revendications 1 ou 2, **caractérisé en ce que** les éléments de renforcement métalliques (11, 21, 31) de ladite au moins une couche d'armature de carcasse (2) sont des câbles métalliques non frettés présentant au test dit de perméabilité, réalisé selon la norme ASTM D2692-98, un débit inférieur à 20 cm$^3$/min.

4. Pneumatique selon l'une des revendications 1 à 3, **caractérisé en ce que** les éléments de renforcement métalliques (11, 21, 31) de ladite au moins une couche d'armature de carcasse (2) sont des câbles métalliques non frettés présentant au test dit de perméabilité, réalisé selon la norme ASTM D2692-98, un débit inférieur à 10 cm$^3$/min.

5. Pneumatique (1) selon l'une des revendications 1 à 4, **caractérisé en ce que** les éléments de renforcement (11, 21) de ladite au moins une couche de l'armature de carcasse (2) sont des câbles métalliques non frettés à couches saturées, au moins une couche interne étant gainée d'une couche constituée d'une composition polymérique telle qu'une composition de caoutchouc non réticulable, réticulable ou réticulée, de préférence à base d'au moins un élastomère diénique.

6. Pneumatique (1) selon l'une des revendications 1 à 5, **caractérisé en ce que** les éléments de renforcement (11, 21) de ladite au moins une couche de l'armature de carcasse sont des câbles métalliques à couches de construction [L+M+N], comportant une première couche (C1) à L fils de diamètre $d_1$ avec L allant de 1 à 4, entourée d'au moins une couche intermédiaire (C2) à M fils de diamètre $d_2$ enroulés ensemble en hélice selon un pas $p_2$ avec M allant de 3 à 12, ladite couche (C2) étant entourée d'une couche externe (C3) de N fils de diamètre $d_3$ enroulés ensemble en hélice selon un pas $p_3$ avec N allant de 8 à 20, une gaine constituée d'une composition de caoutchouc non réticulable, réticulable ou réticulée à base d'au moins un élastomère diénique, recouvrant au moins ladite couche (C1) et/ou au moins ladite couche (C2).

7. Pneumatique (1) selon la revendication 6, **caractérisé en ce que** le diamètre des fils de la première couche (C1) est compris entre 0.10 et 0.5 mm, et **en ce que** le diamètre des fils des couches (C2, C3) est compris entre 0.10 et 0.5 mm.

8. Pneumatique (1) selon l'une des revendications 6 ou 7, **caractérisé en ce que** le pas d'hélice d'enroulement desdits fils de la couche externe (C3) est compris entre 8 et 25 mm.

9. Pneumatique (1) selon l'une des revendications 1 à 4, **caractérisé en ce que** les éléments de renforcement (11, 31) de ladite au moins une couche de l'armature de carcasse (2) sont des câbles métalliques multicouches non frettés, à couche externe insaturée, comportant une âme (C0) de L fils de diamètre $d_0$ entourée d'une couche intermédiaire (C1) de M fils (M = 4, 5, 6 ou 7) de diamètre $d_1$ enroulés ensemble en hélice selon un pas $p_1$, cette couche C1 étant elle-même entourée d'une couche externe (C2) de N fils de diamètre $d_2$ enroulés ensemble en hélice selon un pas $p_2$, N étant inférieur de 1 à 3 au nombre maximal Nmax de fils enroulables en une couche autour de la couche (C1), lesdits câbles présentant les caractéristiques suivantes ($d_0$, $d_1$, $d_2$, $p_1$ et $p_2$ en mm) :

- (i) $0,14 < d_0 < 0,28$ ;
- (ii) $0,12 < d_1 < 0,25$ ;
- (iii) $0,12 < d_2 < 0,25$ ;
- (iv)

| | | |
|---|---|---|
| pour | M = 4 : | $0,40 < (d_0/ d_1) < 0,80$ ; |
| pour | M = 5 : | $0,70 < (d_0/ d_1) < 1,10$ ; |
| pour | M = 6 : | $1,10 < (d_0/ d_1) < 1,40$ ; |
| pour | M = 7 : | $1,40 < (d_0/ d_1) < 1,70$ ; |

- (v) $5 \pi (do+ d_1) < p_1 < p_2 < 5 \pi (d_0 + 2d_1 + d_2)$ ;
- (vi) les fils des couches (C1) et (C2) sont orientés dans le même sens d'enroulement.

10. Pneumatique (1) selon l'une des revendications 6 à 9, **caractérisé en ce que** les éléments de renforcement (11, 21, 31) de ladite au moins une couche de l'armature de carcasse sont des câbles à couches de construction notée [1+M+N].

11. Pneumatique (1) selon l'une des revendications précédentes, **caractérisé en ce que** l'armature de sommet (5) comprend deux couches de sommet de travail d'éléments de renforcement métalliques croisés d'une couche à l'autre en faisant avec la direction circonférentielle des angles compris entre 10° et 45°, lesdits angles étant orientés de part et d'autre de la direction circonférentielle.

12. Pneumatique (1) selon l'une des revendications précédentes, **caractérisé en ce que** l'armature de sommet (5) comprend une couche d'éléments de renforcement circonférentiels.

13. Pneumatique (1) selon l'une des revendications précédentes, **caractérisé en ce que** la hauteur de flanc du pneumatique est inférieure à 165 mm.

14. Pneumatique (1) selon l'une des revendications précédentes, **caractérisé en ce que** le pneumatique est de dimension 315/45 R 22.5.

**Patentansprüche**

1. Reifen (1) für ein Fahrzeug vom Typ Lastkraftwagen, beinhaltend eine radiale Karkassenbewehrung (2), die aus mindestens einer Lage aus metallischen Verstärkungselementen besteht, wobei der Reifen eine Scheitelbewehrung (5) beinhaltet, wobei die Scheitelbewehrung (5) radial von einer Lauffläche (7) überlagert wird, wobei die Lauffläche mittels zweier Flanken mit zwei Wülsten (3) verbunden ist, **dadurch gekennzeichnet, dass** in einem Meridianschnitt des Reifens die kleinste Dicke E der Flanke, gemessen in der Axialrichtung, größer als 10 Millimeter ist und dass die Dicke E2 einer Kautschukmischung, gemessen in der durch die kleinste Dicke der Flanke definierten Axialrichtung, zwischen der Innenfläche (10) des Hohlraums (8) des Reifens und dem Punkt (12) eines metallischen Verstärkungselements (11) der mindestens einen Karkassenbewehrungslage (2), der der Innenfläche (10) des Hohlraums (8) am nächsten ist, größer ist als die Dicke E1 einer Kautschukmischung, gemessen in der durch die kleinste Dicke der Flanke definierten Axialrichtung, zwischen der Außenfläche (16) des Reifens und dem Punkt (17) eines metallischen Verstärkungselements (11) der mindestens einen Karkassenbewehrungslage (2), der der Außenfläche (16) des Reifens am nächsten ist.

2. Reifen (1) nach Anspruch 1, wobei die Kautschukmischung zwischen dem Hohlraum (8) des Reifens und den Verstärkungselementen (11, 21, 31) der mindestens einen Karkassenbewehrungslage (2) aus mindestens drei Kautschukmischungslagen (13, 14, 15) besteht, **dadurch gekennzeichnet, dass** das Verhältnis der Dicke $e_{23}$ der Lage (15), die die Wand des Hohlraums (8) des Reifens bildet, gemessen in der durch die kleinste Dicke der Flanke definierten Axialrichtung, zu der Kautschukmischungsdicke E2, gemessen in der durch die kleinste Dicke der Flanke definierten Axialrichtung, zwischen der Innenfläche (10) des Hohlraums (8) des Reifens und dem Punkt (12) eines metallischen Verstärkungselements (11, 21, 31) der mindestens einen Karkassenbewehrungslage, der der Innenfläche (10) des Hohlraums (8) am nächsten ist, kleiner als 0,5 und vorzugsweise kleiner als 0,4 ist.

3. Reifen (1) nach einem der Ansprüche 1 oder 2, **dadurch gekennzeichnet, dass** die metallischen Verstärkungselemente (11, 21, 31) der mindestens einen Karkassenbewehrungslage (2) nicht umhüllte Metallkabel sind, die beim sogenannten Permeabilitätstest, der gemäß der Norm ASTM D2692-98 durchgeführt wird, einen Durchsatz von weniger als 20 cm$^3$/min aufweisen.

4. Reifen nach einem der Ansprüche 1 bis 3, **dadurch gekennzeichnet, dass** die metallischen Verstärkungselemente (11, 21, 31) der mindestens einen Karkassenbewehrungslage (2) nicht umhüllte Metallkabel sind, die beim sogenannten Permeabilitätstest, der gemäß der Norm ASTM D2692-98 durchgeführt wird, einen Durchsatz von weniger als 10 cm$^3$/min aufweisen.

5. Reifen (1) nach einem der Ansprüche 1 bis 4, **dadurch gekennzeichnet, dass** die Verstärkungselemente (11, 21) der mindestens einen Lage der Karkassenbewehrung (2) nicht umhüllte Metallkabel mit gesättigten Lagen sind, wobei mindestens eine Innenlage von einer Lage umgeben ist, die aus einer Polymermischung, wie etwa einer nicht vernetzbaren, vernetzbaren oder vernetzten Kautschukmischung, vorzugsweise auf Basis mindestens eines Dien-Elastomers, besteht.

6. Reifen (1) nach einem der Ansprüche 1 bis 5, **dadurch gekennzeichnet, dass** die Verstärkungselemente (11, 21) der mindestens einen Lage der Karkassenbewehrung Metallkabel aus Lagen einer Konstruktion [L+M+N] sind, umfassend eine erste Lage (C1) mit L Drähten mit einem Durchmesser $d_1$, wobei L von 1 bis 4 reicht, die von mindestens einer Zwischenlage (C2) mit M Drähten mit einem Durchmesser $d_2$, die gemäß einer Schrittweite $p_2$ schraubenförmig umeinander gewickelt sind, wobei M von 3 bis 12 reicht, umgeben ist, wobei die Lage (C2) von einer Außenlage (C3) mit N Drähten mit einem Durchmesser $d_3$, die gemäß einer Schrittweite $p_3$ schraubenförmig umeinander gewickelt sind, wobei N von 8 bis 20 reicht, umgeben ist, wobei ein Mantel, der aus einer nicht vernetzbaren, vernetzbaren oder vernetzten Kautschukmischung auf Basis mindestens eines Dien-Elastomers besteht, mindestens die Lage (C1) und/oder mindestens die Lage (C2) abdeckt.

7. Reifen (1) nach Anspruch 6, **dadurch gekennzeichnet, dass** der Durchmesser der Drähte der ersten Lage (C1) zwischen 0,10 und 0,5 mm beträgt und dass der Durchmesser der Drähte der Lagen (C2, C3) zwischen 0,10 und 0,5 mm beträgt.

8. Reifen (1) nach einem der Ansprüche 6 oder 7, **dadurch gekennzeichnet, dass** die Schrittweite beim schraubenförmigen Wickeln der Drähte der Außenlage (C3) zwischen 8 und 25 mm beträgt.

9. Reifen (1) nach einem der Ansprüche 1 bis 4, **dadurch gekennzeichnet, dass** die Verstärkungselemente (11, 31) der mindestens einen Lage der Karkassenbewehrung (2) nicht umhüllte mehrlagige Metallkabel mit ungesättigter Außenlage sind, umfassend einen Kern (C0) aus L Drähten mit einem Durchmesser $d_0$, der von einer Zwischenlage (C1) aus M Drähten (M = 4, 5, 6 oder 7) mit einem Durchmesser $d_1$, die gemäß einer Schrittweite $p_1$ schraubenförmig umeinander gewickelt sind, umgeben ist, wobei diese Lage C1 ihrerseits von einer Außenlage (C2) aus N Drähten mit einem Durchmesser $d_2$, die gemäß einer Schrittweite $p_2$ schraubenförmig umeinander gewickelt sind, umgeben ist, wobei N um 1 bis 3 kleiner ist als die maximale Anzahl Nmax von Drähten, die als eine Lage um die Lage (C1) gewickelt werden können, wobei die Kabel die folgenden Eigenschaften ($d_0$, $d_1$, $d_2$, $p_1$ und $p_2$ in mm) aufweisen:

- (i) $0,14 < d_0 < 0,28$ ;
- (ii) $0,12 < d_1 < 0,25$;
- (iii) $0,12 < d_2 < 0,25$;
- (iv)

| für | M = 4: | $0,40 < (d_0/d_1) < 0,80$; |
| für | M = 5: | $0,70 < (d_0/d_1) < 1,10$; |
| für | M = 6: | $1,10 < (d_0/d_1) < 1,40$; |
| für | M = 7: | $1,40 < (d_0/d_1) < 1,70$; |

- (v) 5 $\pi$ (d$_0$ + d$_1$ ) < p$_1$ < p$_2$ < 5 $_\pi$ (d$_0$ + 2d$_1$ + d$_2$);
- (vi) wobei die Drähte der Lagen (C1) und (C2) in der gleichen Wickelrichtung ausgerichtet sind.

10. Reifen (1) nach einem der Ansprüche 6 bis 9, **dadurch gekennzeichnet, dass** die Verstärkungselemente (11, 21, 31) der mindestens einen Lage der Karkassenbewehrung Kabel aus Lagen einer als [1+M+N] bezeichneten Konstruktion sind.

11. Reifen (1) nach einem der vorhergehenden Ansprüche, **dadurch gekennzeichnet, dass** die Scheitelbewehrung (5) zwei Arbeitsscheitellagen aus metallischen Verstärkungselementen beinhaltet, welche sich von einer Lage zur anderen kreuzen, indem sie mit der Umfangsrichtung Winkel zwischen 10° und 45° bilden, wobei die Winkel auf beiden Seiten der Umfangsrichtung ausgerichtet sind.

12. Reifen (1) nach einem der vorhergehenden Ansprüche, **dadurch gekennzeichnet, dass** die Scheitelbewehrung (5) eine Lage aus Umfangsverstärkungselementen beinhaltet.

13. Reifen (1) nach einem der vorhergehenden Ansprüche, **dadurch gekennzeichnet, dass** die Flankenhöhe des Reifens kleiner als 165 mm ist.

14. Reifen (1) nach einem der vorhergehenden Ansprüche, **dadurch gekennzeichnet, dass** der Reifen die Größe 315/45 R 22.5 hat.


**Claims**

1. Tyre (1) for a vehicle of the heavy-duty type, comprising a radial carcass reinforcement (2) made up of at least one layer of metal reinforcing elements, said tyre comprising a crown reinforcement (5), said crown reinforcement (5) being capped radially by a tread (7), said tread being joined to two beads (3) via two sidewalls, **characterized in that,** in a meridian section of the tyre, the smallest thickness E of the sidewall, measured in the axial direction, is greater than 10 millimetres, and **in that** the thickness E2 of rubber compound, measured in the axial direction defined by the smallest thickness of the sidewall, between the inner surface (10) of the cavity (8) of the tyre and the closest point (12) of a metal reinforcing element (11) of said at least one carcass reinforcement layer (2) to said inner surface (10) of the cavity (8) is greater than the thickness E1 of rubber compound, measured in the axial direction defined by the smallest thickness of the sidewall, between the outer surface (16) of the tyre and the closest point (17) of a metal reinforcing element (11) of said at least one carcass reinforcement layer (2) to said outer surface (16) of the tyre.

2. Tyre (1) according to Claim 1, wherein the rubber compound between the cavity (8) of the tyre and the reinforcing elements (11, 21, 31) of said at least one carcass reinforcement layer (2) is made up of at least three layers of rubber compound (13, 14, 15), **characterized in that** the ratio of the thickness $e_{23}$ of the layer (15) forming the wall of the cavity (8) of the tyre, measured in the axial direction defined by the smallest thickness of the sidewall, to the thickness E2 of rubber compound, measured in the axial direction defined by the smallest thickness of the sidewall, between the inner surface (10) of the cavity (8) of the tyre and the closest point (12) of a metal reinforcing element (11, 21, 31) of said at least one carcass reinforcement layer to said inner surface (10) of the cavity (8) is less than 0.5 and preferably less than 0.4.

3. Tyre (1) according to either of Claims 1 and 2, **characterized in that** the metal reinforcing elements (11, 21, 31) of said at least one carcass reinforcement layer (2) are non-wrapped cords that yield a flow rate of less than 20 cm$^3$/min in the test known as the permeability test, measured according to the standard ASTM D2692-98.

4. Tyre according to one of Claims 1 to 3, **characterized in that** the metal reinforcing elements (11, 21, 31) of said at least one carcass reinforcement layer (2) are non-wrapped metal cords that yield a flow rate of less than 10 cm$^3$/min in the test known as the permeability test, measured according to the standard ASTM D2692-98.

5. Tyre (1) according to one of Claims 1 to 4, **characterized in that** the reinforcing elements (11, 21) of said at least one carcass reinforcement layer (2) are non-wrapped metal cords with saturated layers, at least one internal layer being sheathed with a layer made up of a polymer composition such as a non-crosslinkable, crosslinkable or crosslinked rubber composition, preferably based on at least one diene elastomer.

6. Tyre (1) according to one of Claims 1 to 5, **characterized in that** the reinforcing elements (11, 21) of said at least one carcass reinforcement layer are layered metal cords with an [L+M+N] construction, having a first layer (C1) with L threads of diameter $d_1$, where L ranges from 1 to 4, surrounded by at least one intermediate layer (C2) with M threads of diameter $d_2$ that are wound together in a helix at a pitch $p_2$, where M ranges from 3 to 12, said layer (C2) being surrounded by an external layer (C3) of N threads of diameter $d_3$ that are wound together in a helix at a pitch $p_3$, where N ranges from 8 to 20, a sheath made up of a non-crosslinkable, crosslinkable or crosslinked rubber composition based on at least one diene elastomer covering at least said layer (C1) and/or at least said layer (C2).

7. Tyre (1) according to Claim 6, **characterized in that** the diameter of the threads of the first layer (C1) is between 0.10 and 0.5 mm, and **in that** the diameter of the threads of the layers (C2, C3) is between 0.10 and 0.5 mm.

8. Tyre (1) according to either of Claims 6 and 7, **characterized in that** the helical pitch at which said threads of the external layer (C3) are wound is between 8 and 25 mm.

9. Tyre (1) according to one of Claims 1 to 4, **characterized in that** the reinforcing elements (11, 31) of said at least one carcass reinforcement layer (2) are non-wrapped multilayer metal cords, with an unsaturated external layer, having a core (C0) of L threads of diameter $d_0$ surrounded by an intermediate layer (C1) of M threads (M = 4, 5, 6 or 7) of diameter $d_1$ that are wound together in a helix at a pitch $p_1$, this layer C1 itself being surrounded by an external layer (C2) of N threads of diameter $d_2$ that are wound together in a helix at a pitch $p_2$, N being 1 to 3 less than the maximum number Nmax of threads that are able to be wound in a layer around the layer (C1), said cords having the following characteristics ($d_0$, $d_1$, $d_2$, $p_1$ and $p_2$ in mm):

- (i) $0.14 < d_0 < 0.28$;
- (ii) $0.12 < d_1 < 0.25$;
- (iii) $0.12 < d_2 < 0.25$;
- (iv)

| | |
|---|---|
| for | M = 4: $0.40 < (d_0/d_1) < 0.80$; |
| for | M = 5: $0.70 < (d_0/d_1) < 1.10$; |
| for | M = 6: $1.10 < (d_0/d_1) < 1.40$; |
| for | M = 7: $1.40 < (d_0/d_1) < 1.70$; |

- (v) $5\pi(d_0 + d_1) < p_1 < p_2 < 5\pi(d_0 + 2d_1 + d_2)$;
- (vi) the threads of the layers (C1) and (C2) are oriented in the same direction of winding.

10. Tyre (1) according to one of Claims 6 to 9, **characterized in that** the reinforcing elements (11, 21, 31) of said at least one carcass reinforcement layer are layered cords with a construction denoted [1+M+N].

11. Tyre (1) according to one of the preceding claims, **characterized in that** the crown reinforcement (5) comprises two working crown layers of metal reinforcing elements that are crossed from one layer to the other, forming angles of between 10° and 45° with the circumferential direction, said angles being oriented on either side of the circumferential direction.

12. Tyre (1) according to one of the preceding claims, **characterized in that** the crown reinforcement (5) comprises one layer of circumferential reinforcing elements.

13. Tyre (1) according to one of the preceding claims, **characterized in that** the sidewall height of the tyre is less than 165 mm.

14. Tyre (1) according to one of the preceding claims, **characterized in that** the tyre is of the size 315/45 R 22.5.

**FIG. 1**

**FIG.2**

**FIG.3**

**FIG.4**

## RÉFÉRENCES CITÉES DANS LA DESCRIPTION

**Documents brevets cités dans la description**

- EP 3061627 B
- FR 3040655 A1
- FR 2969039